# EUROPÄISCHE PATENTANMELDUNG

(11) **EP 3 024 180 A1**
(43) Veröffentlichungstag der Anmeldung: **25.05.2016**
(21) Anmeldenummer: 15003490.8
(22) Anmeldetag: 23.05.2011
(51) Int. Cl.: H04L 12/46, H04L 12/26

(54) **NETZWERK SOWIE VERFAHREN ZUM BETREIBEN EINES NETZWERKS**

(30) Priorität: 26.05.2010 DE 102010029301
(62) Teilanmeldung aus: 11723408.8
(71) Anmelder: Siemens Aktiengesellschaft, 80333 München (DE)
(72) Erfinder: Beyer, Ralf, 91096 Möhrendorf (DE); Karl, Harald, 90765 Fürth (DE); Wilding, Michael, 71254 Ditzingen (DE)

(57) **Zusammenfassung**

Die Erfindung betrifft ein Netzwerk (3), insbesondere Ethernet-Netzwerk, umfassend als Netzwerkelemente zumindest zwei Netzwerkkomponenten (4A, 4B) die über eine Netzwerkübertragungsleitung (2) miteinander verbunden sind. Erfindungsgemäß ist in der Netzwerkübertragungsleitung (2) zu deren Reichweitenverlängerung mindestens eine Erweiterungseinheit (1) mit zwei externen Ports (A, B) angeordnet, wobei die Erweiterungseinheit (1) einen Ausfall der Netzwerkübertragungsleitung (2) an einem ihrer Ports (A, B) an einen Port (B, A) des nächstfolgenden Netzwerkelements (Netzwerkkomponente 4A oder 4B) weiterleitet. Des Weiteren betrifft die Erfindung ein Verfahren zum Betreiben eines Netzwerks (3).

## Beschreibung

Die Erfindung betrifft ein Netzwerk, insbesondere ein Ethernet-Netzwerk. Das Netzwerk umfasst als Netzwerkelemente zumindest zwei Netzwerkkomponenten, die über eine Netzwerkübertragungsleitung miteinander verbunden sind. Des Weiteren betrifft die Erfindung ein Verfahren zum Betreiben eines Netzwerks.

Durch den zunehmenden Einsatz von Netzwerktechnologien, die aus dem Bereich der Bürokommunikation stammen, z.B. Ethernet, Token Ring, ATM und anderen, auch im Bereich der Industrieautomatisierung gewinnt eine preisgünstige Vernetzung von Endgeräten über derartige Netzwerktechnologien immer mehr an Bedeutung.

Bei den Netzwerktechnologien der Bürokommunikation erfolgt die Vernetzung in der Regel über Knotenpunkte (so genannte Hubs, Switches), von denen sternförmig Punkt-zu-Punkt-Verbindungen zu den einzelnen Endgeräten abgehen. Dies ist für Anwendungen im Industrieumfeld, in dem oftmals linienförmige Strukturen über lange Entfernungen von über 100 m vorliegen, nachteilig.

Bei verschiedenen Anwendungen mit Längen über 100 m ist eine Glasfaser als Netzwerk- oder Übertragungsleitung (in der Netzwerkterminologie auch Link oder Pfad genannt) nicht einsetzbar. Gründe hierfür können Stecker innerhalb der Netzwerkübertragungsleitung, eventuell sogar mit der Gefahr der Verschmutzung, sein. Ein anderer Grund für die Nichtverwendung von Glasfaser ist der zunehmende Einsatz von so genannten Hybridkabeln, d.h. die Netzwerkübertragungsleitung ist zusammen mit anderen Leitungen in einem gemeinsamen Kabel integriert. Diese Hybridkabel können zwischen den Endpunkten der Ethernetübertragung Abgänge und Unterbrechungen aufweisen. Glasfaserkabel haben hierbei den Nachteil, dass die Verbindung zwischen zwei Glasfasern empfindlich, dämpfungsbehaftet und schwierig vor Ort herzustellen ist.

Eine Anwendung, wo die Verwendung von Glasfasern ebenfalls nicht praktikabel ist, ist der Ethernet-Train-Bus. Er verbindet Netzwerkkomponenten eines zugübergreifenden Ethernetnetzwerks. Dabei sind die Netzwerkkomponenten mehrere 100 m voneinander entfernt angeordnet. Die Netzwerkübertragungsleitung ist oft Bestandteil eines Hybridkabels und über mehrere Steckverbinder geführt.

Bei Verwendung von so genannten Twisted-Pair-Leitungen kann das Problem Dämpfung und das des Signalverlustes nur gelöst werden, indem spätestens nach 100 m ein Ethernet-Repeater oder Ethernet-Switch eingebaut wird, welcher das Sendesignal neu erzeugt. Repeater sind aufgrund ihres einfachen Aufbaus einfach zu installieren, kostengünstig und benötigen keine Parametrierung oder Konfiguration.

Problematisch werden die Repeater, wenn für das Ethernetübertragungsmedium, die Netzwerkübertragungsleitung, eine Redundanz gefordert wird. In diesem Fall kommen Redundanzprotokolle wie RSTP (Rapid Spanning Tree Protocol) oder MRP (Media Redundancy Protocol) zum Einsatz. Allen Protokollen gemeinsam ist das Grundprinzip, dass sie von allen vorhandenen Netzwerkverbindungen nur so viele aktivieren, dass alle Netzwerkteilnehmer einen topologischen Baum bilden, d.h. zwischen zwei beliebigen Netzwerkteilnehmern im Netzwerk gibt es genau einen Übertragungsweg oder -pfad. Alle anderen vorhandenen redundanten Netzwerkverbindungen befinden sich in einem inaktiven oder passiven Modus, d.h. über sie findet keine Datenübertragung statt. Es findet nur ein Austausch von Nachrichten der Redundanzprotokolle über diese passiven Ports statt.

Die Netzwerkkomponenten oder -elemente (wie Ethernet-Switches, Netzwerk-Repeatern, Netzwerkübertragungsleitungen), welche bei einem redundanten Netzwerk eingesetzt werden, müssen das entsprechende Redundanzprotokoll unterstützen. Um bei einem Ausfall einer aktiven Netzwerkverbindung möglichst schnell auf andere Netzwerkverbindungen umschalten zu können, wird der Ausfall der Netzwerkübertragungsleitung (auch Ethernet-Link genannt) detektiert. Nach dem Ausfall der Netzwerkübertragungsleitung rekonfigurieren die Ethernet-Switches das Netzwerk neu, so dass wieder ein topologischer Baum entsteht. Parallel zur Rekonfiguration der Netzwerkübertragungsleitung wird die Integrität der Netzwerkverbindungen noch durch Übersendung zyklischer Telegramme überwacht. Da diese jedoch nur ca. alle 100 ms gesendet werden, lässt sich auf der Basis dieser Telegramme keine schnelle Umschaltung erreichen, sie dienen nur als Notfalllösung, falls eine Datenübertragung trotz aktiver Netzwerkverbindung nicht möglich ist (z.B. Fehler in einem Ethernet-Switch-ASIC).

Bei Verwendung von Ethernet-Repeatern oder Ethernet-Switches existiert das Problem, dass beim Ausfall der Netzwerkübertragungsleitung oder des Links an einem Port einer der Netzwerkkomponenten die Netzwerkübertragungsleitung an den anderen Ports der Netzwerkkomponenten aktiv bleibt, d.h. die Netzwerkverbindung der ausgefallenen Netzwerkübertragungsleitung wird nicht weitergeleitet. Dadurch wird eine schnelle Signalisierung des Ausfalls der Netzwerkübertragungsleitung zur nächsten Netzwerkkomponente mit Redundanzfunktionalität und damit eine schnelle Umschaltzeit verhindert. Die einzige Lösung ist, dass für den Ethernet-Switch eine Netzwerkkomponente mit Redundanzfunktionalität verwendet wird. Dies ist jedoch aufgrund der hohen Anzahl von redundanten Komponenten teuer. Zudem ist der Aufwand zur Parametrierung und Konfiguration hoch. Auch ist die Anzahl von Netzwerkkomponenten in einem Netzwerk mit Redundanzfunktionalität von den Normen für die Redundanzprotokolle begrenzt.

US 6 870 814 B1 offenbart ein Netzwerk, das zur Reichweitenverlängerung eine Erweiterungseinheit umfasst, mittels derer Verbindungsausfälle im Netzwerk erkannt werden und Nachrichten zu erkannten Verbindungsausfällen in das Netzwerk aussendbar sind.

Aus US 7 126 908 B1 ist ein Verfahren zum Schutz vor Fehlern auf dem Übertragungsweg in einem Kommunikationsnetzwerk bekannt. Das Netz besteht aus Knoten und Netzwerkübertragungsleitungen. Die Knoten können eine Vielzahl von optischen Verbindungsleitungen miteinander verbinden.

US 2009/0136233 A1 offenbart ein optisches Netzwerk, das zur Reichweitenverlängerung mindestens eine Erweiterungseinheit aufweist, die einen Ausfall der Netzwerkübertragungsleitung an ihren externen Port an ein Überwachungs- und Steuerungsnetzwerk weiterleitet.

WO 99/62229 A1 offenbart ein Terminal für einen drahtlosen Anschluss in einem Telekommunikationsnetz. Das Terminal umfasst eine Weiterleitungsvorrichtung zum Empfangen von Ethernetdatenpaketen aus einem Computernetzwerk und zum Weiterleiten der Ethernetdatenpakete und eine mit der Weiterleitungsvorrichtung gekoppelte Übertragungsvorrichtung zum Empfangen der Ethernetdatenpakete von der Weiterleitungsvorrichtung und zum Übertragen der Ethernetdatenpakete über den drahtlosen Anschluss.

Der Erfindung liegt daher die Aufgabe zugrunde, ein gattungsgemäßes Netzwerk und ein gattungsgemäßes Verfahren zum Betrieb eines Netzwerks derart weiterzuentwickeln, dass es einfacher und mit geringem Aufwand auch bei großen Übertragungsentfernungen schnell und sicher eine Umschaltung bei Ausfall einer der Netzwerkübertragungsleitungen ermöglicht.

Hinsichtlich des Netzwerks wird die Aufgabe erfindungsgemäß durch die im Anspruch 1 angegebenen Merkmale gelöst. Hinsichtlich des Verfahrens zum Betrieb eines Netzwerks wird die Aufgabe erfindungsgemäß durch die im Anspruch 8 angegebenen Merkmale gelöst.

Vorteilhafte Weiterbildungen der Erfindung sind Gegenstand der Unteransprüche.

Ein Netzwerk, insbesondere ein Ethernet-Netzwerk, umfasst als Netzwerkelemente zumindest zwei Netzwerkkomponenten, die über eine Netzwerkübertragungsleitung miteinander verbunden sind. Erfindungsgemäß ist in der Netzwerkübertragungsleitung zu deren Reichweitenverlängerung mindestens eine Erweiterungseinheit mit zwei externen Ports angeordnet, wobei die Erweiterungseinheit einen Ausfall der Netzwerkübertragungsleitung an einem ihrer Ports ermittelt und an einen Port des nächstfolgenden Netzwerkelements, insbesondere der nächstfolgenden Erweiterungseinheit oder der Netzwerkkomponente, weiterleitet.

Dabei wird die Weiterleitung des Ausfalls der Netzwerkübertragungsleitung solange ausgeführt, bis diese an ein Port eines Netzwerkelements mit Redundanzfunktion empfangen wird. Durch eine solche Weiterleitung des Ausfalls der Netzwerkübertragungsleitung oder des Links an dem Port der Erweiterungseinheit auf den Port des nächstfolgenden Netzwerkelements, z.B. einem Repeater, einer weiteren Erweiterungseinheit, einer Netzwerkkomponente, wie einem Endgerät, bis zu einem Netzwerkelement mit Redundanzfunktion ist ein schnelles Umschalten von Redundanzprotokollen ermöglicht. Dabei erfolgt die Weiterleitung des Ausfalls der Netzwerkübertragungsleitung unabhängig vom verwendeten Redundanzprotokoll innerhalb des Netzwerks. Da alle Redundanzprotokolle nach einem Ausfall einer Netzwerkübertragungsleitung automatisch ein Umschalten einleiten, entfällt eine aufwendige Parametrierung, Konfiguration oder aufwendige Redundanzprotokollerkennung.

Ein weiterer Vorteil besteht darin, dass aufgrund des einfachen Aufbaus der Erweiterungseinheit (auch Link Extender genannt) ohne Redundanzfunktion und unabhängig vom verwendeten Redundanzprotokoll die Anzahl von Netzwerkelementen mit Redundanzfunktion nicht erhöht wird.

Im nachfolgenden wird zur besseren Übersichtlichkeit der Ausfall der Netzwerkübertragungsleitung oder Netzwerkverbindung als Linkausfall bezeichnet.

Die Erweiterungseinheit erzeugt bei einem Linkausfall an einem ihrer Ports zumindest ein Warntelegramm und sendet dieses an Ports nachgeschalteter oder empfangender Netzwerkelemente aus. Dabei können alle anderen Netzwerkübertragungsleitungen oder Links bestehen bleiben. D.h. es wird das Warntelegramm nur durch die Erweiterungseinheit oder das Netzwerkelement ausgesendet, welche den Linkausfall erkannt hat.

Zur Erkennung des Fehlerortes, d.h. des Beginns des Linkausfalls, erzeugt das ein Warntelegramm empfangende Netzwerkelement zumindest ein Warntelegramm mit Fehlerpositionskennung und sendet dieses an Ports nachgeschalteter oder empfangender Netzwerkelemente aus. Die Fehlerpositionskennung wird beispielsweise in einfacher Art und Weise durch einen Distanzzähler realisiert. Dabei umfasst das Warntelegramm einen Zähler. Beginnend beim Netzwerkelement oder bei der Erweiterungseinheit, welche einen Linkausfall als erstes identifiziert hat, wird der Zähler von jedem weiteren empfangenden Netzwerkelement beispielsweise um den Wert eins erhöht. Hierdurch kann das das Warntelegramm mit Fehlerpositionskennung empfangende Netzwerkelement den Fehlerort oder die Fehlerposition zwischen den Erweiterungseinheiten schnell und sicher ermitteln.

Für eine einfache Realisierung der Erweiterungseinheit und Integration dieser in das Netzwerk sind die externen Ports der Erweiterungseinheit mittels einer fest verdrahteten Verbindungsschaltung miteinander verschaltet. Dies ermöglicht einen Einsatz von Erweiterungseinheiten im Netzwerk auch bei geringen Stückzahlen.

Für eine einfache Parametrierung und eine besonders flexible und universelle Verbindungsschaltung der Ports umfasst die Erweiterungseinheit eine elektronisch programmierbare Schaltung. Zum Beispiel umfasst die Erweiterungseinheit ein so genanntes field programmable gate array (FPGA) oder ein electronically programmable logic device (EPLD) oder ein Switch-Kopplungselement.

Eine mögliche Ausführungsform zur Weiterleitung des Linkausfalls sieht vor, dass bei Ausfall der Netzwerkübertragungsleitung an einem der Ports der Erweiterungseinheit der andere Port der Erweiterungseinheit deaktiviert wird. Dadurch setzt sich der Linkausfall von einer Erweiterungseinheit zur nächsten Erweiterungseinheit beispielsweise bei Entfernungen von mehreren Kilometern zur nächsten Netzwerkkomponente oder zum nächsten Endgerät fort. Eine solche einfache Weiterleitung des Linkausfalls hat den Vorteil, dass es unabhängig vom verwendeten Redundanzprotokoll im Netzwerk mit Netzwerkkomponenten ohne und mit Redundanzfunktion ausgeführt werden kann und normkonform ist. Eine durch das Erkennen eines Linkausfalls bedingte Verzögerung kann dabei vernachlässigt werden.

Vorzugsweise ist der andere Port der Erweiterungseinheit derart deaktivierbar, dass ein Physical Layer Device des ausgefallenen Ports abgeschaltet oder in einen Schlaf-Modus geschaltet wird oder die Netzwerkübertragungsleitung mittels des Physical Layer Device umgeschaltet wird.

Zweckmäßigerweise schaltet die Erweiterungseinheit bei einem erkannten Linkausfall an einem ihrer Ports den anderen Port in Gegenrichtung in einen vorgegebenen Fehlermode und erzeugt zumindest ein Warntelegramm und sendet dieses an Ports von Netzwerkelementen, die diesem Port in Gegenrichtung nachgeschaltet sind. Hierdurch wird der Linkausfall auch an Netzwerkelementen in Gegenrichtung weitergeleitet und gemeldet.

Für eine einfache Ausführungsform der Erweiterungseinheit ist diese über die Netzwerkübertragungsleitung mit elektrischer Energie versorgbar. Alternativ oder zusätzlich kann die Erweiterungseinheit vom Endgerät selbst mit elektrischer Energie versorgbar sein.

Ausführungsbeispiele der Erfindung werden nachfolgend anhand von Zeichnungen näher beschrieben. Dabei zeigen:
- FIG 1: schematisch in Blockdarstellung mit teilweiser Explosionsdarstellung eine Erweiterungseinheit für eine Netzwerkübertragungsleitung zur Reichweitenverlängerung in einem Netzwerk ohne Linkausfall,
- FIG 2: schematisch in Blockdarstellung mit teilweiser Explosionsdarstellung die Erweiterungseinheit gemäß Figur 1 mit Linkausfall an einem der Ports,
- FIG 3: schematisch in Blockdarstellung mit teilweiser Explosionsdarstellung eine der Erweiterungseinheit gemäß Figur 1 nachgeschaltete Erweiterungseinheit bei einem Linkausfall an der Erweiterungseinheit gemäß Figur 1,
- FIG 4: schematisch in Blockdarstellung mit teilweiser Explosionsdarstellung eine alternative Ausführungsform für eine Erweiterungseinheit mit einem Ethernet-Switch ohne Linkausfall,
- FIG 5: schematisch in Blockdarstellung mit teilweiser Explosionsdarstellung die Erweiterungseinheit gemäß Figur 4 mit einem Linkausfall, und
- FIG 6: schematisch in Blockdarstellung mit teilweiser Explosionsdarstellung eine der Erweiterungseinheit gemäß Figur 4 nachgeschaltete Erweiterungseinheit bei einem Linkausfall an der Erweiterungseinheit gemäß Figur 4.

Einander entsprechende Teile und Daten sowie Funktionen sind in allen Figuren mit den gleichen Bezugszeichen versehen.

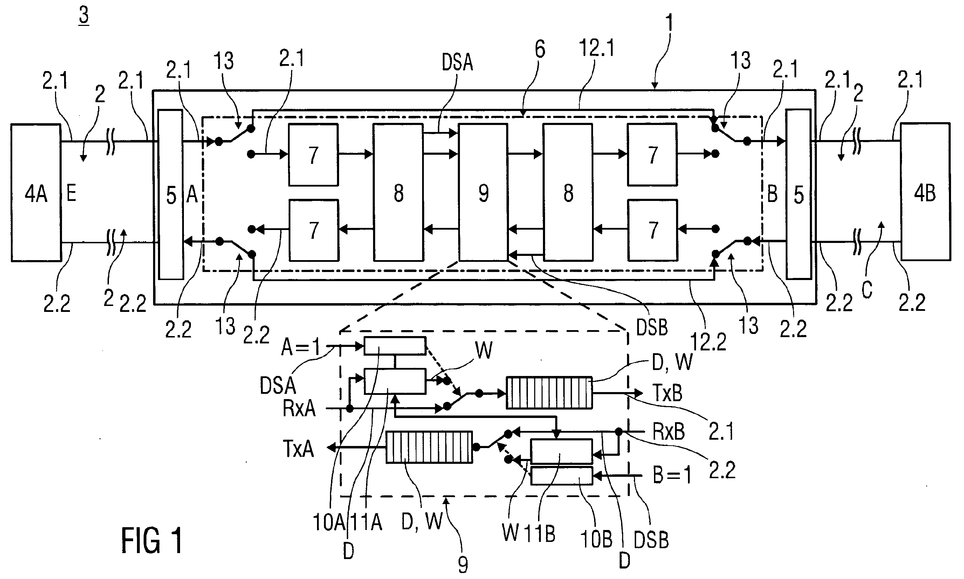

Figur 1 zeigt schematisch in Blockdarstellung eine Erweiterungseinheit 1 für eine Netzwerkübertragungsleitung 2. Die Erweiterungseinheit 1 dient der Reichweitenverlängerung in einem Netzwerk 3.

Bei dem Netzwerk 3 kann es sich um ein Ethernet-Netzwerk oder ein anderes Standard-Netzwerk handeln. Dabei werden in dem Netzwerk 3 über die Netzwerkübertragungsleitung 2 mit Datenleitungen 2.1 und 2.2 (auch Links genannt) Netzwerkkomponenten 4A, 4B, wie z.B. einzelne Endgeräte, miteinander verbunden. Das Netzwerk 3 kann dabei eine Linienstruktur oder Ringstruktur mit einer Vielzahl von über die Datenleitungen 2.1 und 2.2 verbundenen Netzwerkkomponenten 4A, 4B aufweisen.

Mittels der Erweiterungseinheit 1 kann die Netzwerkübertragungsleitung 2 ohne Übertragungsverluste, Dämpfungs- und Signalverluste individuell, insbesondere um die maximale Übertragungsreichweite des Netzwerks, z.B. bei einem Ethernet-Netzwerk um 100 m, verlängert werden. Insbesondere ist durch eine Kaskadenschaltung mehrerer Erweiterungseinheiten 1 in einer Netzwerkübertragungsleitung 2 eine beliebige Distanz ermöglicht.

Aufgrund des nachfolgend beschriebenen einfachen Aufbaus der Erweiterungseinheit 1 kann diese nachträglich in Netzwerkübertragungsleitungen 2 bestehender Netzwerke 3 eingebracht werden.

Die Erweiterungseinheit 1 umfasst zwei externe Ports A und B zum Anschluss der Netzwerkübertragungsleitung 2, die mittels herkömmlicher Stecker 5 mit den Ports A und B verbunden wird. Zusätzlich umfasst die Erweiterungseinheit 1 einen nicht näher dargestellten internen Port.

Dabei sind die Datenleitungen 2.1 und 2.2 und die Netzwerkkomponenten 4A, 4B im Ausführungsbeispiel derart konfiguriert, dass deren Datenverkehr in entgegengesetzter Richtung erfolgt. D.h. mittels der Datenleitung 2.1 erfolgt eine Datenverbindung von der am Port A angeschlossenen Netzwerkkomponente 4A zur am Port B angeschlossenen Netzwerkkomponente 4B. Mittels der Datenleitung 2.2 erfolgt die Datenverbindung umgekehrt, d.h. von der am Port B angeschlossenen Netzwerkkomponente 4B zur am Port A angeschlossenen Netzwerkkomponente 4A.

Zur datentechnischen Verbindung der Ports A und B innerhalb der Erweiterungseinheit 1 ist eine fest verdrahtete Verbindungsschaltung 6 vorgesehen.

Die Erweiterungseinheit 1, insbesondere die Verbindungsschaltung 6 umfasst zur galvanischen Trennung portseitig je Datenleitung 2.1 und 2.2 als Trennelemente 7 z.B. Transformatoren.

Für eine medienunabhängige Schnittstelle der externen Ports A und B sind die Datenleitungen 2.1 und 2.2 in einer ersten Ausführungsform über so genannte physical layer devices 8 (auch kurz PHY genannt) an die externen Ports A und B mittels der Verbindungsschaltung 6 geschaltet. Die physical layer devices 8 dienen der Datenübertragung, um physikalische Datenverbindungen zwischen den Netzwerkkomponenten 4A, 4B zu aktivieren, zu deaktivieren, aufrechtzuerhalten und Daten zu übertragen.

Zwischen den physical layer devices 8 ist in der Verbindungsschaltung 6 eine elektronisch programmierbare Schaltung 9 geschaltet.

Die elektronisch programmierbare Schaltung 9 ist darüber hinaus in Figur 1 in Explosionsdarstellung mit gestrichelter Umrahmung näher gezeigt.

Die elektronisch programmierbare Schaltung 9 kann als so genanntes field programmable gat(FPGA) oder als electronically programmable logic device (EPLD) ausgebildet sein. Alternativ kann die Schaltung 9 aber auch als fest programmierter integrierter Schaltkreis, insbesondere als ASIC mit zusätzlichem Mikrocontroller ausgebildet sein. Eine solche elektronisch programmierbare Schaltung 9 stellt eine einfache Parametrierung, flexible und universelle Konfiguration und Steuerung des Datenverkehrs sowie eine einfache Daten- und Port- sowie Linküberwachung dar.

Die elektronisch programmierbare Schaltung 9 ist derart ausgebildet, dass diese einen Ausfall der Netzwerkübertragungsleitung 2, auch Linkausfall genannt, an einem ihrer externen Ports A oder B ermittelt und an einen externen Port B bzw. A des nächstfolgenden Netzwerkelements, z.B. der Netzwerkkomponente 4B bzw. 4A, weiterleitet.

Hierzu umfasst die elektronisch programmierbare Schaltung 9 je Port A und B einen Controller 10A bzw. 10B und einen Telegramm-Generator 11A bzw. 11B zur Erzeugung von Telegrammen D. Der jeweilige Controller 10A und 10B überwacht die Datenverbindung zwischen Port A und Port B anhand eines aktiven oder inaktiven Datensignals DSA bzw. DSB auf ihren Zustand.

Im Ausführungsbeispiel nach Figur 1 ist die Datenverbindung zwischen Port A und B aktiv, d.h. die Datensignale DSA und DSB der physical layer device 8 weisen den Status "A=1" bzw. "B=1" auf. Die elektronisch programmierbare Schaltung 9 überträgt die Datentelegramme D auf den Datenleitungen 2.1 und 2.2 mit Verzögerung, da die elektronisch programmierbare Schaltung 9 als ein Puffer wirkt, um geringfügig unterschiedliche Taktfrequenzen der beiden physical layer device 8 auszugleichen. Die Verzögerung beträgt etwa einige 100 ns.

Je nach Art der Datenübertragung - über Layer 1 oder Layer 2 des ISO/OSI-Referenzmodells - wird bei jedem Senden ein Datentelegramm D mit neu generierter Präambel oder ein Weiterleiten von empfangenen Datenbytes auf Layer 1 ausgeführt. Dabei werden weder die Datentelegramme D noch die weitergeleiteten Datenbytes überprüft. Insbesondere wird keine zyklische Redundanzprüfung (englisch kurz CRC) durchgeführt.

Im Fall des Ausfalls der Stromversorgung der Erweiterungseinheit 1 oder im Fall der Erkennung eines Fehlers einer der Komponenten, z.B. der Schaltung 9, der Erweiterungseinheit 1, werden die eingehenden Datenleitungen 2.1 und 2.2 der Netzwerkleitung 2 umgeschaltet. Hierzu umfasst die Erweiterungseinheit 1 parallel zur Verbindungsschaltung 6 zwei Bypass-Leitungen 12.1 und 12.2. Zur Umschaltung der Datenleitungen 2.1 und 2.2 auf die Bypass-Leitungen 12.1 bzw. 12.2 umfasst die Erweiterungseinheit 1 zwei Umschaltelemente 13, z.B. Relaiskontakte. Diese werden bei identifiziertem Stromausfall oder bei identifiziertem Komponentenfehler entsprechend angesteuert, so dass die Datenleitungen 2.1 und 2.2 auf die Bypassleitungen 12.1 bzw. 12.2 umgeschaltet werden.

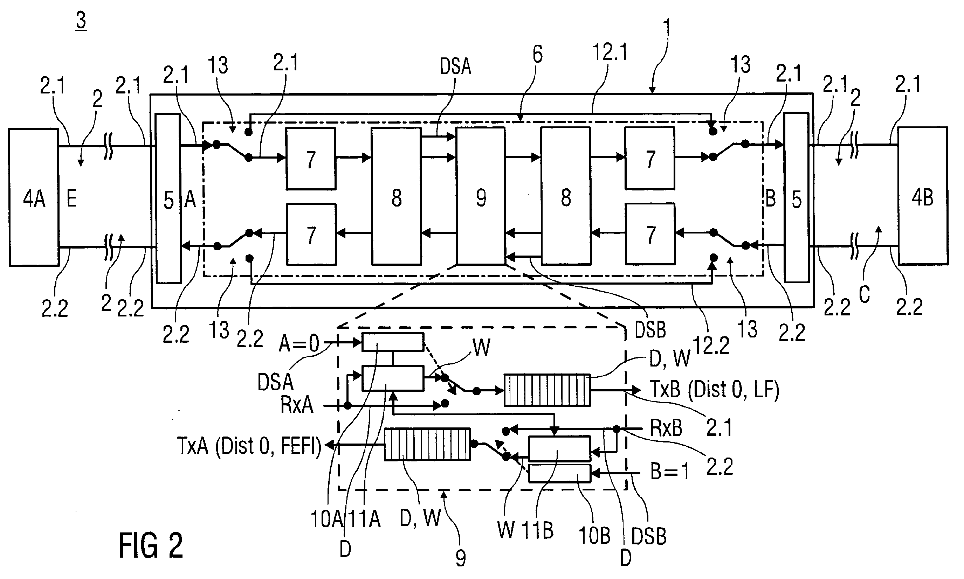

Figur 2 zeigt schematisch in Blockdarstellung die Erweiterungseinheit 1 gemäß Figur 1 mit Linkausfall an dem Port A. Das Datensignal DSA der physical layer device 8 von Port A liefert den Zustand "A=0". Der Controller 10A schaltet die Erweiterungseinheit 1 in einen Fehlermode, einem so genannten Panic-Mode.

Je nach Art und Ausgestaltung des Panic-Modes kann eine der beiden folgenden Maßnahmen durchgeführt werden:
- Deaktivierung des anderen Ports B der Erweiterungseinheit 1 oder
- Aktivierung und/oder Steuerung des Telegramm-Generators 11A zur zyklischen Erzeugung von Warntelegrammen W (auch Panic-Meldungen genannt) anstelle der Datentelegramme D.

Anhand des deaktivierten Ports B oder des Empfangs der Warntelegramme W wird der Linkausfall an den Ports A und B der nachgeschalteten Netzwerkkomponente 4A bzw. 4B erkannt. Sind mehrere Erweiterungseinheiten 1 in der Netzwerkübertragungsleitung 2 integriert, verzögert sich dabei das Erkennen und Melden bzw. Weiterleiten eines Linkausfalls entsprechend der Verzögerung der jeweiligen Erweiterungseinheit 1.

Im Detail wird zur Deaktivierung des Ports B beispielsweise das betreffende physical layer device 8 des Ports A des Linkausfalls abgeschaltet oder in einen Schlaf-Modus gesetzt. Eine solche Weiterleitung des Linkausfalls mittels Deaktivierung des anderen externen Ports B an den Port A der nächsten Netzwerkkomponente 4A ist unabhängig von einem Daten- und/ oder Redundanzprotokoll des Netzwerks 3. Nachteilig dabei ist, dass der Entstehungs- oder Fehlerort des Linkausfalls nicht ermittelt werden kann.

Um den Entstehungsort des Linkausfalls identifizieren zu können, sieht die Erfindung vor, anstelle der Deaktivierung des anderen externen Ports B die Warntelegramme W zu erzeugen und auszusenden.

Mittels der generierten Warntelegramme W, die vom Port A an Port B oder von Port B an Port A der nächstfolgenden Netzwerkkomponente 4A bzw. 4B gesendet werden, ist es möglich, eine Positionskennung zur Ermittlung des Entstehungsorts zu übermitteln. Hierzu umfassen die Warntelegramme W als Positionskennung z.B. Entfernungsdaten "Dist 0" für Entfernung gleich null. D.h. der Linkausfall ist an der Erweiterungseinheit 1 das erste Mal aufgetreten. Zur Ausfallerkennung umfasst die Warnmeldung W Fehlermeldungsdaten "LF" zur Erkennung eines Linkausfalls.

Zur Meldung des Linkausfalls auch in Gegenrichtung der Datenverbindung, d.h. von Port B nach Port A, schaltet der Controller 10B des Ports B ebenfalls in den Fehlermode und erzeugt Warntelegramme W mit den Entfernungsdaten "Dist 0" und den Fehlermeldungsdaten "FEFI".

Die Warntelegramme W werden dabei sowohl vom Controller 10A als auch vom Controller 10B beispielsweise als Ethernet-Telegramme mit IP-Multicast-Ethernet-Adressen, z.B. 01-80-C2-xx.xx.xx) als Zieladresse erzeugt. Jede Erweiterungseinheit 1 weist dabei im Netzwerk 3 eine eigene Ethernet-Adresse mit Quelladresse auf. Derartig erzeugte IP-Multicast-Telegramme werden dabei von als Switch ausgebildeten Netzwerkelementen nicht weitergeleitet.

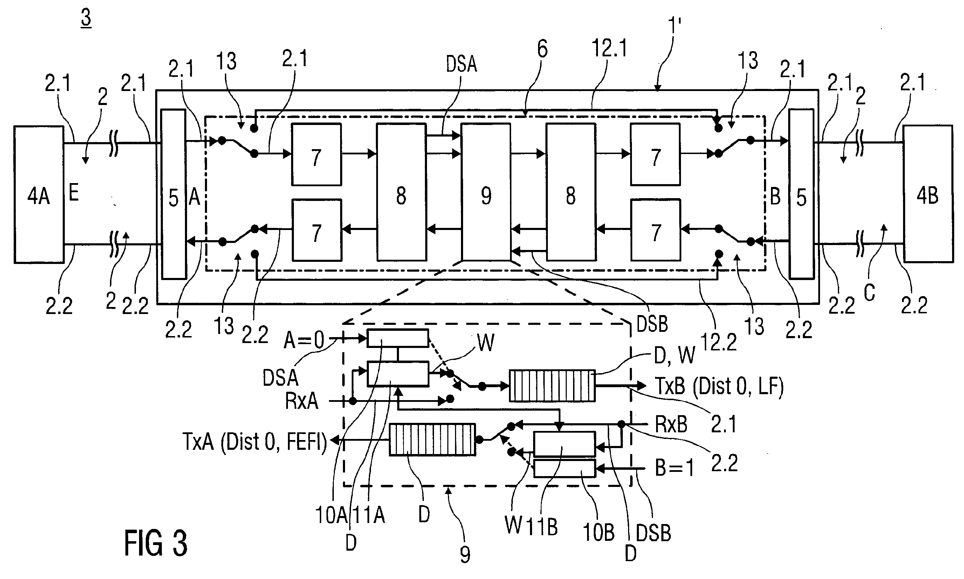

Figur 3 zeigt schematisch in Blockdarstellung die der Erweiterungseinheit 1 gemäß Figur 1 nachgeschaltete Erweiterungseinheit 1' bei einem Linkausfall an der Erweiterungseinheit 1 gemäß Figur 1.

Die nachgeschaltete Erweiterungseinheit 1' empfängt die Warntelegramme W mit den Entfernungsdaten "Dist 0" und den Fehlermeldungsdaten "LF" für Linkausfall. Beide Linksignale oder Datensignale DSA und DSB sind aktiv mit "A=1" und "B=1". Der die Warntelegramme W empfangende Controller 10A schaltet den Port A in einen Fehlerweiterleitungsmode ("Panic Forward Mode"). Die empfangenen Entfernungsdaten "Dist 0" werden um den Wert "1" erhöht und die ausgesendete Warnmeldung W wird mit den Entfernungsdaten "Dist 1" und Fehlermeldungsdaten "LF" an das nächstfolgende Netzwerkelement weitergeleitet. Die Datenverbindung an Port B arbeitet im Normalbetrieb.

Kommt es am Port A zur Erkennung eines gültigen Links oder einer fehlerfreien Datenverbindung durch das Datensignal DSA mit dem Status "A=1", so wird noch eine vorgegebene Anzahl von Warntelegrammen W mit dem Status "LinkOK" versendet. Anschließend werden mittels des Controllers 9 die Erweiterungseinheit 1 und damit die Telegramm-Generatoren 11A, 11B und die Controller 10A, 10B in den normalen Betriebsmodus gesetzt. D.h. empfangene Datentelegramme D oder Datenbytes werden mit etwas Verzögerung mittels der Erweiterungseinheit 1 weitergeleitet. Die Erweiterungseinheit 1 schaltet in den normalen Betriebsmodus, wenn die Datensignale DSA und DSB aktiv sind und keine Warntelegramme W mehr generiert werden. Dabei wird der Linkausfall aus Port A der Erweiterungseinheit 1 in dem Netzwerk 3 so lange vom Netzwerkelement zum nächstfolgenden Netzwerkelement weitergeleitet bis dieses ein Netzwerkelement mit Redundanzfunktion ist. Dieses Netzwerkelement mit Redundanzfunktion schaltet automatisch die Netzwerkverbindung um, auf eine fehlerfreie Datenleitung.

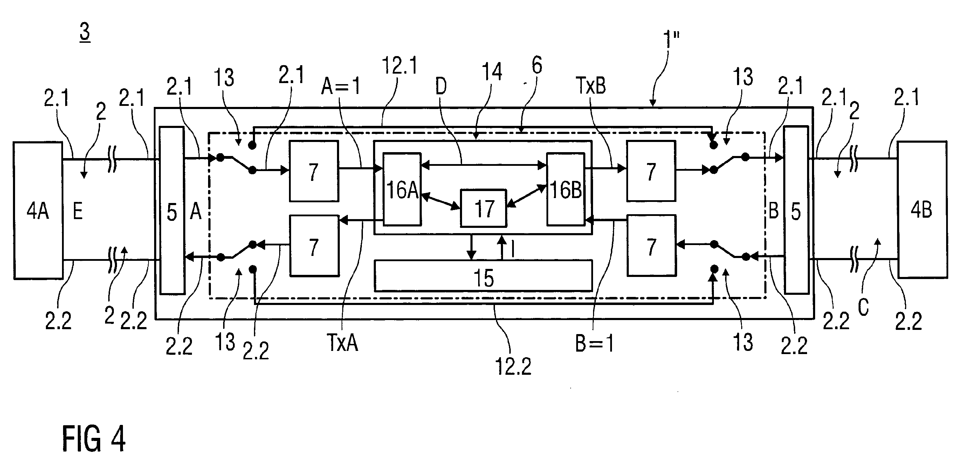

Figur 4 zeigt schematisch in Blockdarstellung eine alternative Ausführungsform für eine Erweiterungseinheit 1'' mit einem gesteuerten Switch-Kopplungselement 14 (auch Ethernet-Switch genannt) ohne Linkausfall.

Im Unterschied zu den Erweiterungseinheiten 1 und 1' sind anstelle der physical layer device 8 und der elektronisch programmierbaren Schaltung 9 das mittels eines Mikrocontrollers 15 gesteuerte Switch-Kopplungselement 14 vorgesehen. Die Steuerung des Datenverkehrs zwischen den externen Ports A und B über die Datenleitungen 2.1 und 2.2 erfolgt mittels des Switch-Kopplungselements 14 gesteuert vom Mikrocontroller 15 über einen internen Port C. Dabei ist der Mikrocontroller 15 über einen internen Port I an das Switch-Kopplungselement 14 geschaltet.

Bei dem Switch-Kopplungselement 14 handelt es sich dabei um einen herkömmlichen Ethernet-Switch ohne Redundanzfunktionalität.

Im Normalmodus werden Datentelegramme D von Port A nach Port B übertragen. Der Mikrocontroller 15 überwacht anhand von portbezogenen Statusregistern 16A, 16B laufend den Link-Status, d.h. die Datenverbindung der Netzwerkleitung 2 und deren Datenleitungen 2.1, 2.2 an den externen Ports A und B.

Das Switch-Kopplungselement 14 ist dabei derart ausgelegt, dass die Datenübertragung zwischen den externen Ports A und B und dem internen Port C individuell gesperrt werden kann.

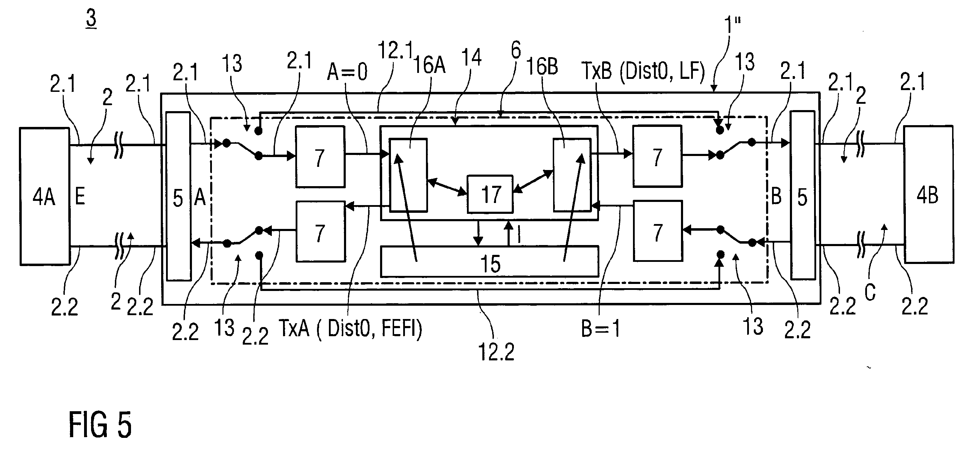

Figur 5 zeigt schematisch in Blockdarstellung die Erweiterungseinheit 1'' gemäß Figur 4 mit einem Linkausfall auf Port A.

Der Mikrocontroller 15 erkennt den Linkausfall am Port A und sperrt den Daten- oder Querverkehr von Port A nach Port B und umgekehrt. D.h. alle Datentelegramme D werden über den vom Mikrocontroller 15 gesteuerten internen Port C verarbeitet. Port B der Erweiterungseinheit 1 wird deaktiviert.

Alternativ zur portdeaktivierung erzeugt der Mikrocontroller 15 analog zu dem Ausführungsbeispiel nach Figuren 1 bis 4 Warntelegramme W als so genannte Panik-Telegramme mit Entfernungsdaten "Dist 0" und Fehlermeldungsdaten "LF" im Pfad mit Linkausfall oder "FEFI" im Pfad in Gegenrichtung.

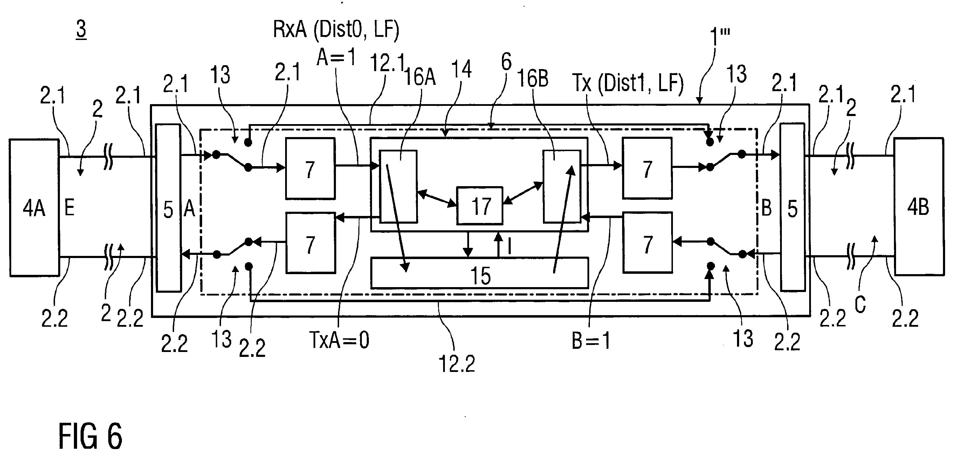

Figur 6 zeigt schematisch in Blockdarstellung eine der Erweiterungseinheit 1'' gemäß Figur 4 nachgeschaltete Erweiterungseinheit 1''' bei einem Linkausfall am Port A an der Erweiterungseinheit 1'' gemäß Figur 4.

Analog zum Ausführungsbeispiel nach den Figuren 1 bis 4 werden von dem Mikrocontroller 15 die am Port A empfangenen Warntelegramme W der vorgeschalteten Erweiterungseinheit 1'' empfangen. Der Mikrocontroller 9 sperrt den direkten Datenverkehr von Port A nach Port B und umgekehrt. Die Datentelegramme D werden nunmehr nur noch über den internen Port C vom Mikrocontroller 15 verarbeitet.

Der Mikrocontroller 15 sendet Warntelegramme W mit geänderten Entfernungsdaten "Dist 1'' und gleichen Fehlermeldungsdaten "LF" aus, d.h. anhand der um den Wert 1 erhöhten Entfernungsdaten "Dist 1" kann der Entstehungsort des Linkausfalls identifiziert werden.

Auf Port A werden keine Datentelegramme D mehr gesendet, der Link bleibt aber zur Weiterleitung der Warntelegramme W aktiv (A=1, B=1).

Alternativ werden die Warntelegramme W nicht weitergeleitet, da sie eine IP-Multicast-Adresse aufweisen. In diesem Fall erkennt der Mikrocontroller 15 einen Linkausfall und meldet diesen weiter.

Bei einer Redundanz-Einheit einer der Netzwerkelemente sind die Warnmeldefunktionen bei einem Linkausfall analog realisiert, so dass der Linkausfall und dessen Entstehungsort automatisch erkannt wird.

Die Erweiterungseinheit 1 kann sowohl für eine Datenübertragung auf Layer 1 als auch auf Layer 2 des ISO/OSI-Referenzmodells ausgelegt werden. Die hier beschriebenen Möglichkeiten der Weiterleitung eines Linkausfalls durch Deaktivierung von Ports, Erzeugung von Warntelegrammen W erfolgt identisch.

## Patentansprüche

1. Netzwerk (3), insbesondere Ethernet-Netzwerk, umfassend als Netzwerkelemente zumindest zwei Netzwerkkomponenten (4A, 4B) die über eine Netzwerkübertragungsleitung (2) miteinander verbunden sind, wobei in der Netzwerkübertragungsleitung (2) zu deren Reichweitenverlängerung mindestens eine Erweiterungseinheit (1) mit zwei externen Ports (A, B) angeordnet ist und die Erweiterungseinheit (1) einen Ausfall der Netzwerkübertragungsleitung (2) an einem ihrer externen Ports (A oder B) an einen externen Port (B, A) des nächstfolgenden Netzwerkelements (Netzwerkkomponente 4B oder 4A) weiterleitet, wobei die Erweiterungseinheit (1) zumindest ein Warntelegramm (W) erzeugt und an externe Ports (B oder A) nachgeschalteter Netzwerkelemente (Netzwerkkomponente 4A oder 4B) aussendet,
**dadurch gekennzeichnet, dass** das ein Warntelegramm (W) empfangende Netzwerkelement (4A, 4B) zumindest ein Warntelegramm (W) mit Fehlerpositionskennung erzeugt und an Ports nachgeschalteter Netzwerkelemente aussendet.

2. Netzwerk nach Anspruch 1,
**dadurch gekennzeichnet, dass** die externen Ports (A, B) der Erweiterungseinheit (1) mittels einer fest verdrahteten Verbindungsschaltung (6) miteinander verschaltet sind.

3. Netzwerk nach Anspruch 1,
**dadurch gekennzeichnet, dass** die Erweiterungseinheit (1) als eine elektronisch programmierbare Schaltung (9) ausgebildet ist.

4. Netzwerk nach einem der vorhergehenden Ansprüche, **dadurch gekennzeichnet, dass** bei Ausfall der Netzwerkübertragungsleitung (2) an einem der Ports (A, B) der Erweiterungseinheit (1) der andere Port (B, A) deaktivierbar ist.

5. Netzwerk nach einem der vorhergehenden Ansprüche, **dadurch gekennzeichnet, dass** bei Ausfall der Netzwerkübertragungsleitung (2) an einem der Ports (A, B) der Erweiterungseinheit (1) der andere Port (B, A) derart deaktivierbar ist, dass ein Physical Layer Device (8) des ausgefallenen Ports (A, B) abgeschaltet oder in einen Schlaf-Modus geschaltet wird.

6. Netzwerk nach einem der vorhergehenden Ansprüche, **dadurch gekennzeichnet, dass** bei Ausfall der Netzwerkübertragungsleitung (2) an einem der Ports (A, B) der Erweiterungseinheit (1) diese den anderen Port (B, A) in Gegenrichtung in einen vorgegebenen Fehlermode schaltet und zumindest ein Warntelegramm (W) erzeugt und an Ports von Netzwerkelementen (4A, 4B), die diesem Port (B oder A) in Gegenrichtung nachgeschaltet sind, aussendet.

7. Netzwerk nach einem der vorhergehenden Ansprüche, **dadurch gekennzeichnet, dass** die Erweiterungseinheit (1) über die Netzwerkübertragungsleitung (2) mit elektrischer Energie versorgbar ist.

8. Verfahren zum Betreiben eines Netzwerks (3), insbesondere Ethernet-Netzwerks, umfassend als Netzwerkelemente zumindest zwei Netzwerkkomponenten (4A, 4B), die über eine Netzwerkübertragungsleitung (2) miteinander verbunden sind, wobei mindestens eine in der Netzwerkübertragungsleitung (2) zu deren Reichweitenverlängerung angeordnete Erweiterungseinheit (1) mit zwei externen Ports (A, B) derart ausgebildet ist, dass diese einen Ausfall der Netzwerkübertragungsleitung (2) an einem ihrer Ports (A, B) an einen externen Port (B, A) des nächstfolgenden Netzwerkelements (Netzwerkkomponente 4A oder 4B) weiterleitet, indem sie zumindest ein Warntelegramm (W) erzeugt und an externe Ports (B, A) nachgeschalteter Netzwerkelemente (4A, 4B) aussendet,
**dadurch gekennzeichnet, dass** durch das ein Warntelegramm (W) empfangende Netzwerkelement (4A, 4B) zumindest ein Warntelegramm (W) mit Fehlerpositionskennung erzeugt und an Ports nachgeschalteter Netzwerkelemente ausgesendet wird.
